# EUROPEAN PATENT APPLICATION

(11) **EP 4 764 021 A1**
(43) Date of publication of application: **24.06.2026**
(21) Application number: 24870972.7
(22) Date of filing: 27.09.2024
(51) Int. Cl.: C22C 38/44, C22C 38/40, C22C 38/18

(54) **HIGH-STRENGTH AND HIGH-TOUGHNESS MINING CHAIN STEEL AND MANUFACTURING METHOD THEREFOR**

(30) Priority: 28.09.2023 CN 202311283412
(71) Applicant: BAOSHAN IRON & STEEL CO., LTD., Shanghai 201900 (CN)
(72) Inventor: WANG, Chengquan, Shanghai 201900 (CN); ZHAO, Sixin, Shanghai 201900 (CN); YU, Dajiang, Shanghai 201900 (CN); ZHANG, Jun, Shanghai 201900 (CN); WANG, Wei, Shanghai 201900 (CN); GAO, Jiaqiang, Shanghai 201900 (CN); WANG, Qiang, Shanghai 201900 (CN)
(74) Representative: Maiwald GmbH
(86) International application number: PCT/CN2024/121790
(87) International publication number: WO 2025/067435

(57) **Abstract**

The present invention discloses a high-strength and high-toughness steel for mining chains and a manufacturing method therefor. The steel for mining chains comprises the following chemical components in percentage by mass: C: 0.19-0.30%, Si: 0.05-0.6%, Mn: 1.0-1.8%, Cr: 0.4-0.8%, Ni: 0.5-0.9%, Mo: 0.3-0.55%, Ti: 0.015-0.035%, Al: 0.011-0.05%, B: 0.0015-0.005%, N: 0.002-0.006%, and the balance being Fe and inevitable impurities. The high-strength and high-toughness steel for mining chains according to the present invention exhibits excellent impact toughness while maintaining high strength, making it widely applicable in fields requiring high-strength steel, such as marine engineering and mining machinery.

## Description

### TECHNICAL FIELD

The present invention relates to the technical field of chain steel, particularly to a high-strength and high-toughness steel for mining chains and a manufacturing method therefor.

### BACKGROUND

Round-link chains for mining are critical components used in mechanized underground coal mining. They primarily serve as transmission chains on scraper conveyors, transfer conveyors, coal shearers, and coal ploughs to enable power transmission. During practical application, round-link chains for mining are required to exhibit properties such as high strength and toughness, fatigue resistance, and wear resistance to ensure reliable operation. Given that the working environment of a coal mine is often underground with high humidity and corrosive substance, round-link chains for mining are also typically required to possess good corrosion resistance.

In the prior art, the typical steel commonly used for round-link chains for mining in the coal industry is the chain steel graded according to "GB/T 10560-2017 Steel for welded round-link chains for mining", wherein grade such as 23MnNiMoCr54 steel (abbreviated as grade 54 steel) is the most widely used as high-strength round-link chain steel for mining. Additionally, in order to meet the demands of different downstream users in practical applications, major domestic steel manufacturers have developed a series of high-strength chain steels for mining.

The Chinese patent with publication number CN110714164A ("A High-Quality Cr54 Steel for Chain Links in Coal Mines and Manufacturing Method Therefor", published on November 6, 2020) discloses a high-quality grade 54 steel for chain links in coal mines. By introducing carbon equivalent, cold crack sensitivity coefficient, and hot crack sensitivity coefficient, the weldability of the chain steel can be ensured and the resistance to cold brittleness and hot brittleness can be improved.

The Chinese patent with publication number CN104532143A ("A Large-Specification, High-Strength Steel for Mining Chains and Manufacturing Method Therefor", published on April 22, 2015) discloses an improved large-specification chain steel for mining with a diameter of 40 to 100 mm, a yield strength of ≥ 980 MPa, a tensile strength of ≥ 1180 MPa, an elongation of ≥ 13%, a reduction of area of ≥ 50%, and a Charpy impact energy at room temperature of > 100 J.

Furthermore, some prior arts optimized the steel composition based on the composition of grade 54 steel. For example, the Chinese patent with publication number CN111101078A ("A Nickel-Free High-Strength Steel for Mining Round-Link Chains and Manufacturing Method Therefor", published on May 5, 2020) discloses a high-strength steel for mining round-link chains that does not comprise Ni element. By reducing the content of the precious metal element Ni in the alloy while increasing the contents of C, Si, Cr, and Mo alloying elements, the production cost is significantly reduced while ensuring mechanical performance.

The aforementioned prior arts primarily manufacture steel for mining chains with high strength through optimized composition design, which improves the wear resistance of chains, achieves a longer service life, and reduces the application cost of chains.

However, it should be noted that in practical applications, as the environment of the underground coal mine is mostly humid, high-strength chains are inevitably affected by environmental corrosion during use. Additionally, high-strength chains have high stress and are more sensitive to stress corrosion, making them prone to corrosion fatigue fracture during the mid-use period (low-load brittle fractures, occurring frequently within at most a few months, or even days), leading to premature failure of the chains.

Therefore, the inventors aim to provide a novel chain steel with excellent comprehensive performance. Through alloy composition optimization, the present invention not only achieves high strength but also offers an excellent match of toughness and ductility along with lower production costs, which effectively addresses the issue of reduced service life caused by the mismatch between strength, toughness, and ductility in the present chains.

### SUMMARY OF THE INVENTION

Aiming at the problem in the prior art where the service life of chains is affected by the mismatch between strength, and toughness and ductility, the objective of the present invention is to provide a chain steel and a manufacturing method therefor. Specifically, by designing the alloy composition and optimizing the manufacturing process, the present invention provides a high-strength and high-toughness steel for mining chains that possesses relatively high strength well-matched with toughness and ductility, along with good wear resistance and fatigue performance.

To achieve the aforementioned objective, the present invention adopts the following technical solutions:
The first aspect of the present invention provides a chain steel comprising the following chemical components in percentage by mass:
C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%; and the balance being Fe and inevitable impurities.

The second aspect of the present invention provides a chain steel, in addition to 90% or more of Fe and inevitable impurities, further comprising the following chemical components in percentage by mass: C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%.

Preferably, the inevitable impurities comprise P, S, O and H, wherein P ≤ 0.012%, S ≤ 0.01%, O ≤ 0.0015%, and H ≤ 0.00015%.

Preferably, the chemical composition of the chain steel satisfies the following formula: Ti/(O + 2N) = 2-4; wherein Ti, O, and N respectively represent the content in percentage by mass of corresponding elements.

Preferably, a portion of the B element in the chain steel presents in solid solution form, wherein a proportion of the B element presenting in solid solution form relative to a total content of B element (B_{solid}/Bₜₒₜₐₗ) = 65-85%.

Preferably, the chain steel has a microstructure of tempered martensite and finely dispersed carbides dispersed interlamellarly.

Preferably, the chain steel satisfies the following properties: a yield strength Rp_{0.2} of ≥ 1150 MPa, a tensile strength Rₘ of ≥ 1250 MPa, preferably ≥ 1293 MPa, an elongation A of ≥ 13%, a reduction of area Z of ≥ 50%, and an impact energy Aₖᵥ at room temperature of ≥ 60 J.

The third aspect of the present invention provides a manufacturing method for the aforementioned chain steel, comprising:
(1) Smelting and continuous casting of molten steel to obtain a casting blank; the smelting process sequentially comprises electric furnace smelting, LF furnace refining, and vacuum refining; during the vacuum refining process, a holding time of the molten steel before tapping is greater than 10 minutes;
(2) Subjecting the casting blank to rolling, quenching, and tempering treatments to obtain the chain steel; a heating temperature for the quenching treatment is 850-980°C, and a holding time is 1-4 h; a tempering temperature for the tempering treatment is 390-550°C, preferably 400-550°C, more preferably 400-450°C, a tempering time is 1-3 h, and after the tempering treatment, water cooling is performed to room temperature.

Preferably, during the electric furnace smelting process, molten iron and scrap steel are used as raw materials, foaming slagging is conducted throughout the electric furnace smelting step, and an endpoint C content of the molten steel is controlled to 0.06-0.10%, with a tapping temperature of the molten steel at 1640-1680°C.

Preferably, during the electric furnace smelting step, a percentage of the molten iron in the raw materials is controlled to 30-60%.

Preferably, the LF furnace refining process comprises the following steps in sequence:
1) Adding lime and fluorite to create slag during the early stage of LF refining;
2) Using aluminum granules or silicon carbide to enhance deoxidation and desulfurization, and feeding aluminum wire based on the target Al content in the molten steel;
3) Adjusting the alloy composition and temperature of the molten steel to meet the target requirements before tapping.

Preferably, during the vacuum refining process, a slag removal treatment is performed on the molten steel after LF refining, followed by vacuum degassing and refining in a VD furnace or RH furnace, Al is then supplemented as required by the chemical composition of the molten steel, after ensuring that the free oxygen content in the molten steel is below 5 ppm, Ca and ferrotitanium are added, followed by the addition of ferroboron after 5-10 minutes, so that the composition of the molten steel is adjusted to the target composition.

Preferably, during the vacuum degassing and refining in the VD furnace or RH furnace, an intense stirring is performed for more than 10 minutes at a vacuum level of less than 67 Pa.

Preferably, titanium wire is selected as the ferrotitanium, and boron wire is selected as the ferroboron.

Preferably, during the continuous casting process, full protection casting is adopted, a superheat of the molten steel in the tundish is controlled to 15-30°C, electromagnetic stirring is applied in the crystallizer and at the solidification end, and a soft reduction process of 10-25 mm is implemented at the solidification end to obtain the casting blank.

Preferably, during the continuous casting process, with constant casting speed control, a continuous casting speed is 0.42-0.8 m/min, preferably 0.5-0.8 m/min; a secondary cooling water ratio is 0.3-0.5 L/t; and the casting blank is either hot charged or subjected to slow cooling in a slow-cooling pit.

Preferably, during the rolling process, the casting blank is sent to a heating furnace for heating and then rolled, with a heating temperature controlled at 1150-1250°C, a heating holding time at 2-6 h, an initial rolling temperature at ≥ 1100°C, and a finishing rolling temperature at ≥ 850°C.

Preferably, during the rolling process, after exiting the heating furnace and undergoing high-pressure water descaling, the casting blank is rolled and then sent to a holding pit for slow cooling for ≥ 24 h.

In the chain steel of the present invention, the design principle of each chemical element is as follows. Herein, unless otherwise explicitly stated, the content of elements is expressed in percentage by mass.

C: C is an essential element to ensure the strength of the steel. Increasing C content in steel will increase the non-equilibrium structure transformation ability of the steel, thereby significantly improving the strength of the steel. In the present invention, diffusion of C element in the steel can be inhibited by the quenching and tempering treatment process to form shear martensitic transformation, thereby remarkably improving the strength of steel. However, the content of C element in the steel should not be too high, as too high a C content will have adverse effects on the ductility and toughness of the steel, and will significantly increase the carbon equivalent of the material, deteriorating the welding performance of the steel. Therefore, the content of C element is controlled to 0.19-0.30%, preferably 0.20-0.30%.

Si: Adding an appropriate amount of Si to steel can enhance the stability of austenite during cooling process and prevent the formation of coarse carbides. However, it should be noted that the content of Si element in steel should not be excessively high. When the content of Si element is too high, the brittleness of the steel would be increased. Therefore, the content of Si element is controlled to 0.05-0.6%, preferably 0.21-0.47%.

Mn: Adding an appropriate amount of Mn not only improves the stability of austenite in steel but also enhances the hardenability of the steel. Furthermore, in the present invention, Mn can increase the strength of martensite in steel through solid solution strengthening, thereby improving the strength of the steel. However, it should be noted that the content of Mn element in steel should also not be excessively high. When the content of Mn element is too high, austenite grains will grow easily during quenching heating, promoting the segregation of harmful elements at grain boundaries. Therefore, the content of Mn element is controlled to 1.0-1.8%.

Cr: Cr can improve the hardenability of steel, promoting the formation of hardened martensitic microstructure, which is beneficial for increasing the strength of the steel. Additionally, Cr carbides can slow down the growth of grains in the heat affected zone at weld joints, and is very beneficial for the welded microstructure of chains for mining. Adding appropriate amounts of Cr and Ni to steel helps improve the corrosion resistance of the steel. However, it should be noted that the content of Cr element in steel should not be excessively high. When the content of Cr element in steel is too high, the formation of carbides during quenching and tempering heat treatment will deplete a large amount of C element in the steel. Moreover, excessive carbides can aggregate at grain boundaries, reducing the toughness of the material and significantly increasing the carbon equivalent, thereby impairing the flash welding performance of the chain steel. Therefore, the content of Cr element is controlled to 0.4-0.8%.

Ni: Ni can present in steel in the form of a solid solution. The Ni element can be used in combination with the Cr element to significantly enhance the hardenability of steel. Adding an appropriate amount of Ni to steel can lower the carbon content at the eutectoid point, which is beneficial for improving the strength of the steel. Furthermore, as indicated by the carbon equivalent formula, Ni has a relatively small coefficient, meaning it has a minor impact on weldability. However, Ni is a precious alloying element, and excessive addition of Ni element will lead to an increase in production costs. Therefore, to achieve excellent performance while ensuring lower production costs, the content of Ni element is controlled to 0.5-0.9%.

Mo: Mo primarily presents in steel in the form of a solid solution, so as to provide solid solution strengthening effects. This helps enhance the hardenability of steel, promoting the formation of martensite in steel during quenching. However, excessive Mo should not be added to steel. When the content of the Mo element in the steel is too high, it significantly increases the carbon equivalent of the material, thereby negatively affecting the flash welding performance of chain steel. In addition, Mo is a valuable alloying element, and the addition of an excessive amount of Mo element will lead to an increase in production cost. Therefore, the content of Mo element is controlled to 0.3-0.55%.

B: The primary role of B is to enhance the hardenability of steel, thereby conserving other scarcer and more valuable elements such as nickel and molybdenum. However, B is a reactive element with strong affinities for oxygen, nitrogen and other elements, readily forming boron oxide, boron nitride, etc. This can cause B element to lose its beneficial effects, leading to greater fluctuations in steel hardenability and affecting stable performance of the steel. Excess B can form intermetallic compounds with Fe that segregate at grain boundaries, which is detrimental to steel toughness and may also increase temper embrittlement tendency. Therefore, in the high-strength and high-toughness steel for mining chains of the present invention, the content of B element is controlled to 0.0015-0.005%.

Ti: Ti element has a very strong affinity for nitrogen, oxygen, and carbon, and has relatively high precipitation temperature. It is a favorable element for effectively fixing nitrogen and oxygen, thereby preventing the B element in the steel from combining with oxygen and nitrogen elements and losing its effectiveness in enhancing hardenability. Ti forms fine precipitates in steel, which can improve the strength and toughness of the steel, particularly the impact toughness at low temperatures. However, when the content of Ti element in steel is too high, it can form coarse, angular particles during smelting and solidification, reducing the impact toughness of the steel. Therefore, in the high-strength and high-toughness steel for mining chains of the present invention, the content of Ti element is controlled to 0.015-0.035%.

Al: The main function of Al is deoxidation. Additionally, AlN formed by the combination of Al and N can effectively refine grains. However, it should be noted that the content of Al element in steel should not be excessively high. When the content of Al element in the steel is too high, the castability of the steel will be affected and the toughness of the steel will be deteriorated. Therefore, in the high-strength and high-toughness steel for mining chains of the present invention, the content of Al element in percentage by mass is controlled to 0.011-0.05%, preferably between 0.02-0.05%.

N: N is an austenite-forming element and also a MX-type precipitate-forming element, contributing tograin refinement. In boron-containing steels, the N element in the steel will combine with the B element, causing the boron in the steel to lose its alloying effect. To prevent the depletion of B element by the N element, the content of N element in the steel must be strictly controlled. In the high-strength and high-toughness steel for mining chains of the present invention, the content of N element in percentage by mass is controlled to 0.002-0.006%.

In the chain steel of the present invention, the content of impurity elements in percentage by mass satisfies: P ≤ 0.012%, S ≤ 0.01%, O ≤ 0.0015%, H ≤ 0.00015%. P, S, O, and H are all impurity elements in steel. Under technically feasible conditions, to obtain steel with better performance and higher quality, the content of impurity elements in the material should be reduced as much as possible.

Both impurity elements P and S are inevitable harmful elements in steel, and both can deteriorate steel performance. Although P can improve the corrosion resistance of steel, its side effects are greater from a comprehensive prospect. Therefore, the content of P element is controlled to not exceed 0.012%, and the content of S element is controlled to not exceed 0.01%.

Impurity element O can form oxide inclusions and composite inclusions with elements such as Al, Ti, and B in steel, which is detrimental to the steel performance. Therefore, the content of O element is controlled to not exceed 0.0015%.

The impurity element H tends to segregate at defects in steel. High-strength steels with tensile strengths exceeding 1000 MPa are particularly sensitive to H content. Hydrogen-induced delayed fracture caused by the element H can lead to premature failure of chains. Therefore, the content of H element is controlled to not exceed 0.00015%.

In other embodiments, other harmful elements may also be present in the steel, such as element As, Pb, Sn, Sb, Bi, etc. In compliance with national laws, regulations, and standards, the content of these harmful elements should be minimized as much as possible.

In terms of the present invention, through the rational design of major alloying elements and the addition of B element to enhance steel performance, the addition of expensive alloying elements Ni and Mo is reduced. By fully leveraging the interplay between various alloying elements and their impacts on microstructure and mechanical properties, the microstructure of the steel of the present invention is precisely controlled. This enables the high-strength steel of the present invention to achieve high strength combined with well-matched toughness and ductility, along with excellent wear resistance and fatigue performance.

In specific examples, to ensure that the B element in the steel can function in a solid-solution form in the steel, the chain steel of the present invention utilizes Ti to fix the O and N in the steel. The chemical composition satisfies the following formula: Ti/(O + 2N) = 2-4; wherein Ti, O, and N are substituted with contents of the corresponding elements in percentage by mass.

In the technical solution of the present invention, apart from the C element, the strength and toughness of the alloy are primarily adjusted through elements such as Mn, Ni, Mo, Cr, and B to obtain a high-strength and high-toughness chain steel. Among them, the B element is used to partially replace Ni and Mo elements, thereby reducing the production cost of the chain steel. Because B element readily combines with elements such as N and O in the steel and loses its ability to improve hardenability, a certain amount of Ti element is added to the steel to fix the O and N elements in the steel. During composition design, when the value of Ti/(O + 2N) in the steel falls within the range of 2-4, Ti can fully exert its role in fixing O and N in the steel. Furthermore, to ensure that the B element stably enhances the hardenability of the steel and substitutes for Ni and Mo elements, the proportion of B element presenting in solid-solution form accounts for 65-85% of the total content of B element in the steel. When Ti/(O + 2N) in the steel is too low, i.e., less than 2, the O and N elements in the steel cannot be completely fixed by Ti and tend to combine with B element in the steel to form boron-containing nitrides or oxides. Consequently, a part or all of the B element in the steel becomes ineffective, leading to severe fluctuations in hardenability of the steel and impairing the service performance of the steel. When Ti/(O + 2N) in the steel is too high, i.e., greater than 4, an excess of Ti element remains in the steel. During solidification and cooling of the steel, this excess Ti can combine with C element in the steel and continue to precipitate and grow with TiN as the nucleus, forming coarse Ti(C,N) particles. Such sharp-edged particles can easily reduce the impact and fatigue properties of the chain steel and are detrimental to the use of the chain steel.

Compared to conventional production technologies, the present invention offers the following advantageous effects:
1. In the high-strength and high-toughness chain steel of the present invention, a rational chemical composition design is adopted in combination with optimized manufacturing processes. Strengthening elements such as Si, Mn, Ni, Cr, and Mo in the steel are optimized, and a certain amount of B element is added to replace expensive alloying elements Ni and Mo, thereby improving the hardenability of the steel for mining chains. At the same time, the content and ratio relationship of Ti, N, and O elements in the steel are controlled. Furthermore, the proportion of B element presenting in solid-solution form accounts for 65-85% to the total content of B element in the steel, allowing the B element to effectively enhance the hardenability of the steel and prevent fluctuations in steel performance. Through a rational quenching + tempering treatment process, the present invention enables the steel to achieve an excellent match of strength-ductility and strength-toughness.
2. The high-strength and high-toughness chain steel of the present invention features rational chemical composition and process design during smelting and rolling, with a wide process window and convenient production, enabling large-scale commercial manufacturing.
3. The high-strength and high-toughness chain steel obtained by the method of the present invention exhibits excellent strength and toughness which can be widely used in applications requiring high-strength steel, such as mining and marine engineering.

### BRIEF DESCRIPTION OF THE DRAWINGS

From the detailed description of non-limiting examples with reference to the following drawings, other features, objectives, and advantages of the present invention will become more apparent:

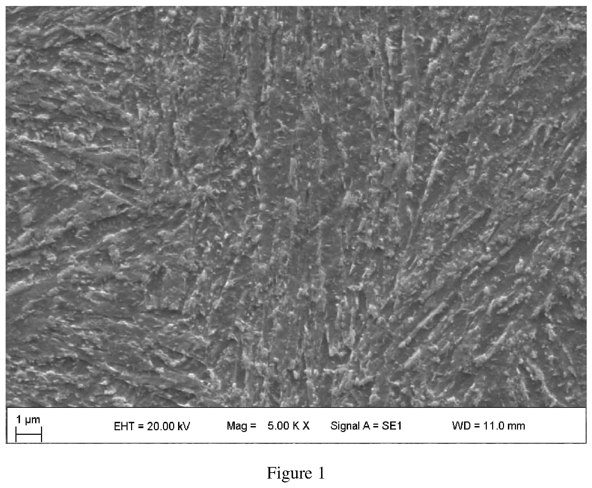

Figure 1 is a scanning electron microscopy image of the high-strength and high-toughness steel for mining chains produced according to Example 1 of the present invention.

### DETAILED DESCRIPTION

In order to better understand the above technical solutions of the present invention, the technical solution of the present invention is further explained below in conjunction with the Examples.

The present invention provides a chain steel, in addition to 90% or more Fe and inevitable impurities, further comprising the following chemical components in percentage by mass: C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%.

The present invention also provides a chain steel comprising the following chemical components in percentage by mass: C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%; and the balance being Fe and inevitable impurities.

Research has found that when the composition of the steel meets the aforementioned chemical components and their contents fall within the aforementioned ranges, the chain steel will exhibit excellent performances. In the present invention, unless otherwise explicitly stated, the content of components is expressed in percentage by mass.

In the chain steel of the present invention, P, S, O, and H are all impurity elements in the steel. Under technically feasible conditions, to obtain steel with better performance and higher quality, the content of impurity elements in the material should be reduced as much as possible. Therefore, among the inevitable impurities, P ≤ 0.012%, S ≤0.01%, O ≤ 0.0015%, and H ≤ 0.00015%.

To ensure that the B element in the steel can function in a solid solution form in the steel, the elements Ti, O, and N in the high-strength and high-toughness steel for mining chains of the present invention should satisfy the following requirement: Ti/(O + 2N) = 2-4; wherein Ti, O, and N represent the content of the corresponding elements in percentage by mass.

In the technical solution of the present invention, apart from the C element, the strength and toughness of the alloy are primarily adjusted through elements such as Mn, Ni, Mo, Cr, and B to obtain a high-strength high-toughness chain steel. Among them, the B element is used to partially replace Ni and Mo elements, thereby reducing the production cost of the chain steel. Because B element readily combines with elements such as N and O in the steel and loses its ability to improve hardenability, a certain amount of Ti element is added to the steel to fix the O and N elements in the steel. During composition design, when the value of Ti/(O + 2N) in the steel falls within the range of 2-4, Ti can fully exert its role in fixing O and N in the steel. Furthermore, to ensure that the B element stably enhances the hardenability of the steel and substitutes for Ni and Mo elements, the proportion of B element presenting in solid-solution form accounts for 65-85% of the total content of B element in the steel. When Ti/(O + 2N) in the steel is too low, i.e., less than 2, the O and N elements in the steel cannot be completely fixed by Ti and tend to combine with B element in the steel to form boron-containing nitrides or oxides. Consequently, a part or all of the B element in the steel becomes ineffective, leading to severe fluctuations in hardenability of the steel and impairing the service performance of the steel. When Ti/(O + 2N) in the steel is too high, i.e., greater than 4, an excess of Ti element remains in the steel. During solidification and cooling of the steel, this excess Ti can combine with C element in the steel and continue to precipitate and grow with TiN as the nucleus, forming coarse Ti(C,N) particles. Such sharp-edged particles can easily reduce the impact and fatigue properties of the chain steel and are detrimental to the use of the chain steel.

The performance of the aforementioned chain steel satisfy the following: a yield strength Rp_{0.2} of ≥ 1150 MPa, a tensile strength Rₘ of ≥ 1250 MPa, preferably ≥ 1293 MPa, an elongation A of ≥ 13%, a reduction of area Z of ≥ 50%, and an impact energy Aₖᵥ at room temperature of ≥ 60 J.

The present invention also provides a manufacturing method for the aforementioned chain steel. This production process is simple, and the produced high-strength and high-toughness steel for mining chains exhibits excellent strength and toughness. The manufacturing method for the aforementioned chain steel is exemplarily described below. Specifically, electric furnace smelting, LF furnace refining, vacuum refining, continuous casting, rolling, quenching, and tempering treatment are adopted. The detailed process is as follows:
(1) Electric furnace smelting. Using molten iron and scrap steel as raw materials, control the percentage of molten iron in the raw materials to 30-60%. foaming slagging is conducted throughout the electric furnace smelting process to ensure good oxidation and boiling, promoting the floating of inclusions and gases in the steel. The endpoint C content of the molten steel is controlled to 0.06-0.10%, with a tapping temperature of the molten steel at 1640-1680°C.
(2) LF furnace refining. The molten steel from the electric furnace smelting is transferred to the LF station for refining. At the early stage of LF refining, an appropriate amount of lime and fluorite is added to create slag, improving slag fluidity. Aluminum granules or silicon carbide are used to enhance deoxidation and desulfurization, and aluminum wire is fed based on the target Al content in the molten steel. After adjusting the alloy composition and temperature of the molten steel to meet the target requirements, the steel is tapped to ensure stable steel performance and the temperature requirements for the continuous casting process.
(3) Vacuum refining. Slag removal treatment is performed on the molten steel after LF refining, followed by vacuum degassing and refining in a VD furnace or RH furnace. An intense stirring is performed for more than 10 minutes at a vacuum level of less than 67 Pa. After vacuum refining, alloying elements are supplemented according to the chemical composition requirements of the molten steel. Specifically, Al is supplemented first to ensure that the free oxygen content in the molten steel is below 5 ppm. Subsequently, Ca and ferrotitanium are added, followed by the addition of ferroboron after 5-10 minutes, so as to adjust the composition of the molten steel to the target composition. Titanium wire is selected as the ferrotitanium, and boron wire is selected as the ferroboron, both of which are added via a wire feeder to improve alloy yield and compositional stability. The molten steel is held for more than 10 minutes, and tapping is performed once the composition and temperature meet the required standards.
(4) Continuous Casting. Full protection casting is adopted to prevent secondary oxidation and nitrogen addition of the molten steel. Low superheat casting is employed, with a superheat of the molten steel in the tundish controlled at 15-30°C. Electromagnetic stirring is applied in the crystallizer and at the solidification end, and a soft reduction process of 10-25 mm is implemented at the solidification end to obtain the casting blank, thereby reducing internal segregation defects and improving the quality of the casting blank. During the continuous casting process, a continuous casting speed is 0.42-0.8 m/min, preferably 0.5-0.8 m/min, with constant casting speed control. A secondary cooling water ratio is 0.3-0.5 L/t. The resulting casting blank is either hot charged or subjected to slow cooling in a slow-cooling pit.
(5) Rolling. The casting blank is sent to a heating furnace for heating, with a heating temperature controlled at 1150-1250°C, a heating holding time at 2-6 h. Subsequently, rolling is performed with an initial rolling temperature at ≥ 1100°C, and a finishing rolling temperature at ≥ 850°C. The rolled round steel is then straightened, detected for cracks, and ground to remove surface defects. The specification of the aforementioned rolled round steel is Φ26-100 mm. Additionally, it is preferable that the casting blank is rolled and then sent to a holding pit for slow cooling for ≥ 24 h after exiting the heating furnace and undergoing high-pressure water descaling.
(6) Quenching and tempering treatments: The aforementioned rolled round steel is subjected to quenching and tempering treatments. A heating temperature for the quenching treatment is 850-980°C, and a holding time is 1-4 h. A tempering temperature for the tempering treatment is 390-550°C, preferably 400-550°C, more preferably 400-450°C, with a tempering time of 1-3 h. After the tempering treatment, water cooling is performed to room temperature. the steel after quenching treatment forms a martensitic microstructure with a fine lamellar structure. The alloying elements in the steel are presented in the martensite as supersaturated solid solutions, resulting in high strength but relatively poor ductility and impact toughness. Subsequent tempering treatment facilitates the dispersive precipitation of the supersaturated alloying elements in the martensite as nanometer-sized carbides between the martensite lamellae. This significantly enhances the strength of the steel while suppressing temper embrittlement, so that the chain steel according to the present invention has relatively high strength as well as excellent impact performance.

The high-strength and high-toughness steel for mining chains of the present invention and the manufacturing method therefor are further described with reference to specific examples below. It should be understood that the following examples are only intended to describe specific embodiments of the present disclosure and are not to be construed as limiting the scope of protection of the present disclosure in any way.

### Examples

### Examples 1-6

The high-strength and high-toughness steel for mining chains of Examples 1-6 were manufactured through the following steps:
(1) Smelting and continuous casting of molten steel according to the composition shown in Table 1 to obtain a casting blank. The manufacturing steps comprised the following:
   1) Electric furnace smelting, controlling an endpoint [C]: 0.06-0.10% and the tapping temperature of the molten steel to 1640-1680°C.
   2) LF furnace refining: The molten steel from the electric furnace smelting was transferred to the LF furnace for refining. Aluminum granules or silicon carbide were used to enhance deoxidation and desulfurization. Aluminum wire was fed based on the target Al content in the molten steel to ensure that the free oxygen content in the molten steel is below 5 ppm. After adjusting the alloy composition and temperature of the molten steel to meet the target requirements, the steel is tapped.
   3) VD/RH vacuum refining treatment: Slag removal treatment was performed on the molten steel after LF furnace refining, followed by vacuum degassing and refining in a VD or RH furnace. An intense stirring was performed for more than 10 minutes at a vacuum level of less than 67 Pa. After vacuum refining, Al was supplemented according to the chemical composition requirements to ensure that the free oxygen content in the molten steel was below 5 ppm. Subsequently, Ca and ferrotitanium were added, and ferroboron was added after 5 minutes to adjust the molten steel to the target composition. The molten steel was held for more than 10 minutes and tapping was performed once the composition and temperature meet the required standards.
   4) Continuous casting: Full protection casting was adopted to prevent secondary oxidation of the molten steel and nitrogen addition during the process. Low superheat casting was employed, with a superheat of the molten steel in the tundish controlled at 15-30°C. Electromagnetic stirring was applied in the crystallizer and at the solidification end, and a soft reduction of 10-25 mm was implemented at the solidification end to reduce defects such as internal segregation of the ingot and improve the quality of the ingot. A continuous casting speed was 0.42-0.8 m/min with constant speed control, and a secondary cooling water ratio was 0.3-0.5 l/t. The casting blank was either hot charged or subjected to slow cooling in a slow-cooling pit.
(5) Rolling: The obtained casting blank was sent to a heating furnace for heating, with a heating temperature controlled at 1150-1250°C and a heating holding time at 2-6 h. During rolling, an initial rolling temperature of the continuous casting blank was controlled at ≥ 1100°C, and a finishing rolling temperature at ≥ 850°C. The rolled round steel was straightened, detected for cracks, and ground to remove surface defects, then sent to a holding pit for slow cooling for ≥ 24 h.
(6) Quenching and tempering treatment: The round steel obtained after rolling was subjected to quenching and tempering treatments. A quenching heating temperature was 850-980°C, and a holding time was 1-4 h; a tempering temperature was 390-550°C, with a tempering time of 1-3 h. After the tempering treatment, water cooling was performed to room temperature to obtain the chain steel.

### Comparative Examples 1-2

In Comparative Examples 1 and 2, chain steels were produced using the processes of electric furnace + LF + RH + continuous casting + quenching and tempering. The differences lie in that the composition, content, and/or process parameters of the chain steel do not comply with the present invention. Specific details are shown in Tables 1-1, 1-2, 2-1, and 2-2.

Table 1-1 shows the chemical composition of the chain steel of Examples 1-6 and Comparative Examples 1-2.

**Table 1-1 (wt%, the balance being Fe and other impurities except P, S, N, O, and H)**

| | C | Si | Mn | S | P | Cr | Ni | Mo | Ti | Al | B | N | O | H |
|---|---|---|---|---|---|---|---|---|---|---|---|---|---|---|
| Example 1 | 0.21 | 0.34 | 1.76 | 0.007 | 0.007 | 0.57 | 0.75 | 0.31 | 0.025 | 0.026 | 0.0039 | 0.0057 | 0.0009 | 0.00015 |
| Example 2 | 0.25 | 0.47 | 1.05 | 0.008 | 0.012 | 0.71 | 0.53 | 0.55 | 0.021 | 0.011 | 0.0018 | 0.0039 | 0.0012 | 0.0001 |
| Example 3 | 0.19 | 0.3 | 1.65 | 0.005 | 0.006 | 0.41 | 0.89 | 0.31 | 0.029 | 0.048 | 0.0041 | 0.0041 | 0.0007 | 0.00014 |
| Example 4 | 0.27 | 0.41 | 1.35 | 0.009 | 0.01 | 0.66 | 0.69 | 0.37 | 0.034 | 0.017 | 0.0034 | 0.0055 | 0.0005 | 0.00015 |
| Example 5 | 0.29 | 0.09 | 1.51 | 0.002 | 0.009 | 0.52 | 0.61 | 0.42 | 0.033 | 0.042 | 0.0028 | 0.0035 | 0.0015 | 0.00012 |
| Example 6 | 0.23 | 0.21 | 1.17 | 0.002 | 0.012 | 0.78 | 0.59 | 0.46 | 0.016 | 0.035 | 0.0023 | 0.0026 | 0.0010 | 0.00011 |
| Comparative Example 1 | 0.25 | 0.15 | 1.3 | 0.006 | 0.008 | 0.55 | 0.98 | 0.56 | | 0.027 | | 0.0086 | 0.0012 | 0.0002 |
| Comparative Example 2 | 0.22 | 0.32 | 0.48 | 0.006 | 0.013 | 0.81 | 3.02 | 0.55 | | 0.03 | | 0.01 | 0.0015 | 0.0002 |

Table 1-2 shows the Ti/(O+2N) ratio and the proportion of B element presenting in solid-solution form relative to the total content of B element in the chemical composition of the chain steel.

**Table 1-2**

| | Ti/ (O+2N) | B_{solid}/Bₜₒₜₐₗ |
|---|---|---|
| Example 1 | 2.03 | 75% |
| Example 2 | 2.33 | 67% |
| Example 3 | 3.26 | 79% |
| Example 4 | 2.96 | 83% |
| Example 5 | 3.88 | 71% |
| Example 6 | 2.58 | 69% |
| Comparative Example 1 | | |
| Comparative Example 2 | | |

Table 2-1 and Table 2-2 show the process parameters for Examples 1-6 and Comparative Examples 1-2 in the manufacturing process of the chain steel.

**Table 2-1**

| | Smelting and casting process | Superheat of molten steel (°C) | Casting speed (m/min) | Heating temperature (°C) | Heating time (h) | Finishing rolling temperature (°C) | Specification of round steel (mm) |
|---|---|---|---|---|---|---|---|
| Example 1 | electric furnace+LF+VD+continuous casting | 23 | 0.49 | 1220 | 4 | 960 | Φ38 |
| Example 2 | electric furnace+LF+VD+continuous casting | 18 | 0.57 | 1200 | 5 | 920 | Φ26 |
| Example 3 | electric furnace+LF+VD+continuous casting | 28 | 0.42 | 1150 | 6 | 850 | Φ48 |
| Example 4 | electric furnace+LF+RH+continuous casting | 25 | 0.78 | 1240 | 2 | 900 | Φ60 |
| Example 5 | electric furnace+LF+RH+continuous casting | 30 | 0.71 | 1180 | 6 | 880 | Φ100 |
| Example 6 | electric furnace+LF+RH+continuous casting | 29 | 0.67 | 1220 | 3 | 980 | Φ75 |
| Comparative Example 1 | electric furnace+LF+VD+continuous casting | | | | | | Φ48 |
| Comparative Example 2 | electric furnace+LF+RH+continuous casting | | | | | | Φ38 |

**Table 2-2**

| | Quenching temperature (°C) | Holding time (h) | Tempering temperature (°C) | Tempering time (h) |
|---|---|---|---|---|
| Example 1 | 980 | 1 | 390 | 2 |
| Example 2 | 880 | 1 | 400 | 1 |
| Example 3 | 930 | 2 | 410 | 1 |
| Example 4 | 910 | 2 | 450 | 2 |
| Example 5 | 850 | 4 | 430 | 3 |
| Example 6 | 950 | 3 | 440 | 3 |
| Comparative Example 1 | 880 | 1 | 410 | 1 |
| Comparative Example 2 | 880 | 1 | 430 | 1 |

Samples were taken from the chain steels obtained in Examples 1-6 and Comparative Examples 1-2 to obtain corresponding chain steel specimens. Tensile tests and Charpy impact tests were conducted on the obtained chain steels to acquire performance data for the chain steels of the Examples and Comparative Examples. The test results are shown in Table 3.

The test methods for the relevant performance parameters are as follows:
Tensile test: According to the national standard GB/T 2975, samples of the chain steel from Examples 1-6 and Comparative Examples 1-2 were taken and manufactured into tensile test specimens. The tensile property testing was performed according to the national standard GB/T 228.1.

Charpy impact test: According to the national standard GB/T 2975, samples of the chain steel from Examples 1-6 and Comparative Examples 1-2 were taken and manufactured into impact test specimens. The impact property testing was conducted according to the national standard GB/T 229.

Table 3 shows the performance parameters of the chain steels from Examples 1-6 and Comparative Examples 1-2.

**Table 3**

| | Yield strength Rp_{0.2} (MPa) | Tensile strength Rₘ (MPa) | Elongation A (%) | Reduction of area Z (%) | Impact energy Aₖᵥ at room temperature (J) |
|---|---|---|---|---|---|
| Example 1 | 1310 | 1405 | **13.5** | **52** | **74** |
| Example 2 | 1265 | 1380 | 15 | 53 | 91 |
| Example 3 | 1276 | 1401 | **13.5** | 65 | 85 |
| Example 4 | 1235 | 1325 | 15 | 57 | 97 |
| Example 5 | 1205 | 1356 | 14.5 | 65 | 110 |
| Example 6 | **1186** | **1293** | 15 | 61 | 123 |
| Comparative Example 1 | ***1125*** | ***1258*** | 16 | 55 | 97 |
| Comparative Example 2 | ***1140*** | ***1237*** | 15 | 61 | 105 |

As shown in Table 3, the high-strength and high-toughness steel for mining chains produced in Examples 1-6 of the present invention had excellent comprehensive performance, wherein the yield strength Rp_{0.2}≥ 1186 MPa, tensile strength Rₘ≥ 1293 MPa, elongation A≥ 13.5%, reduction of area Z≥ 50%, and impact energy Aₖᵥ at room temperature≥ 74 J. It can thus be concluded that the high-strength and high-toughness steel for mining chains of Examples 1-6 of the present invention are significantly superior to the chain steel in Comparative Examples 1-2.

Based on the data in Tables 1 and 3, it can be seen that compared to the chain steels of Comparative Examples 1 and 2, the chemical composition of the high-strength and high-toughness steel for mining chains in Examples 1-6 of the present invention fall within the claimed range. At the same time, by employing the optimized quenching + tempering treatment process, both high strength and excellent impact toughness were achieved.

Figure 1 is a scanning electron microscopy image of the microstructure of the chain steel from Example 1 after quenching + tempering treatments. As shown in Figure 1, the microstructure of the chain steel in Example 1 after quenching + tempering treatments is tempered martensite. The martensite lamellar spacing is small, and fine, dispersed nanoscale carbides are precipitated between the martensite lamellae. These fine nanoscale carbides can significantly enhance the strength and toughness of the steel, thereby achieving a high-strength and high-toughness steel for mining chains with excellent performance.

In summary, through rational chemical composition design combined with optimized processing, the present invention obtains a high-strength and high-toughness steel for mining chains with outstanding performance. It can be widely applied in fields requiring high-strength steel, such as marine engineering and mining machinery.

It should be noted that all technical features described in the present application may be combined in any manner, provided that such combinations are not mutually exclusive. As will be apparent to those skilled in the art, various modifications and variations may be made to the present invention without departing from the spirit and scope thereof. For instance, features illustrated or described as part of one embodiment may be employed in conjunction with another embodiment to yield further embodiments. Accordingly, the present invention is intended to embrace all such modifications and variations that fall within the scope of the appended claims and their equivalents.

## Claims

1. A chain steel, comprising the following chemical components in percentage by mass: C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%; and the balance being Fe and inevitable impurities.

2. A chain steel, in addition to 90% or more of Fe and inevitable impurities, further comprising the following chemical components in percentage by mass: C: 0.19-0.30%, preferably 0.20-0.30%; Si: 0.05-0.6%, preferably 0.21-0.47%; Mn: 1.0-1.8%; Cr: 0.4-0.8%; Ni: 0.5-0.9%; Mo: 0.3-0.55%; Ti: 0.015-0.035%; Al: 0.011-0.05%, preferably 0.02-0.05%; B: 0.0015-0.005%; N: 0.002-0.006%.

3. The chain steel according to claim 1 or 2, wherein the inevitable impurities comprise P, S, O and H, wherein P ≤ 0.012%, S ≤ 0.01%, O ≤ 0.0015%, and H ≤ 0.00015%.

4. The chain steel according to claim 3, wherein the chemical composition of the chain steel satisfies the following formula: Ti/(O + 2N) = 2-4; wherein Ti, O, and N respectively represent the content in percentage by mass of corresponding elements.

5. The chain steel according to claim 1 or 2, wherein a portion of the B element in the chain steel presents in solid solution form, wherein a proportion of the B element presenting in solid solution form relative to a total content of B element (B_{solid}/Bₜₒₜₐₗ) = 65-85%.

6. The chain steel according to claim 1 or 2, wherein the chain steel has a microstructure of tempered martensite and carbides dispersed interlamellarly.

7. The chain steel according to claim 1 or 2, wherein the chain steel satisfies the following properties: a yield strength Rp_{0.2} of ≥ 1150 MPa, a tensile strength Rₘ of ≥ 1250 MPa, preferably ≥ 1293 MPa, an elongation A of ≥ 13%, a reduction of area Z of ≥ 50%, and an impact energy Aₖᵥ at room temperature of ≥ 60 J.

8. A manufacturing method for the chain steel according to any one of claims 1-7, comprising the following steps performed in sequence:
(1) Smelting and continuous casting molten steel to obtain a casting blank; the smelting process sequentially comprises electric furnace smelting, LF furnace refining, and vacuum refining; during the vacuum refining process, a holding time of the molten steel before tapping is greater than 10 minutes;
(2) Subjecting the casting blank to rolling, quenching, and tempering treatments to obtain the chain steel; a heating temperature for the quenching treatment is 850-980°C, and a holding time is 1-4 h; a tempering temperature for the tempering treatment is 390-550°C, preferably 400-550°C, more preferably 400-450°C, a tempering time is 1-3 h, and after the tempering treatment, water cooling is performed to room temperature.

9. The manufacturing method according to claim 8, wherein during the electric furnace smelting process, molten iron and scrap steel are used as raw materials, foaming slagging is conducted throughout the electric furnace smelting step, and an endpoint C content of a molten steel is controlled to 0.06-0.10%, with a tapping temperature of the molten steel at 1640-1680°C.

10. The manufacturing method according to claim 9, wherein during the electric furnace smelting step, a percentage of the molten iron in the raw materials is controlled to 30-60%.

11. The manufacturing method according to claim 8, wherein the LF furnace refining process comprises the following steps performed in sequence:
1) Adding lime and fluorite to create slag during the early stage of LF refining;
2) Using aluminum granules or silicon carbide to enhance deoxidation and desulfurization, and feeding aluminum wire based on the target Al content in the molten steel;
3) Adjusting the alloy composition and temperature of the molten steel to meet the target requirements before tapping.

12. The manufacturing method according to claim 8, wherein during the vacuum refining process, a slag removal treatment is performed on the molten steel after LF refining, followed by vacuum degassing and refining in a VD furnace or RH furnace, Al is then supplemented as required by the chemical composition of the molten steel, after ensuring that the free oxygen content in the molten steel is below 5 ppm, Ca and ferrotitanium are added, followed by the addition of ferroboron after 5-10 minutes, so that the composition of the molten steel is adjusted to the target composition.

13. The manufacturing method according to claim 12, wherein during the vacuum degassing and refining in the VD furnace or RH furnace, an intense stirring is performed for more than 10 minutes at a vacuum level of less than 67 Pa.

14. The manufacturing method according to claim 12, wherein titanium wire is selected as the ferrotitanium, and boron wire is selected as the ferroboron.

15. The manufacturing method according to claim 8, wherein during the continuous casting process, full protection casting is adopted, a superheat of the molten steel in the tundish is controlled to 15-30°C, electromagnetic stirring is applied in the crystallizer and at the solidification end, and a soft reduction process of 10-25 mm is implemented at the solidification end to obtain the casting blank.

16. The manufacturing method according to claim 15, wherein during the continuous casting process, with constant casting speed control, a continuous casting speed is 0.42-0.8 m/min, preferably 0.5-0.8 m/min; a secondary cooling water ratio is 0.3-0.5 L/t; and the casting blank is either hot charged or subjected to slow cooling in a slow-cooling pit.

17. The manufacturing method according to claim 8, wherein during the rolling process, the casting blank is sent to a heating furnace for heating and then rolled, with a heating temperature controlled at 1150-1250°C, a heating holding time at 2-6 h, an initial rolling temperature at ≥ 1100°C, and a finishing rolling temperature at ≥ 850°C.

18. The manufacturing method according to claim 17, wherein during the rolling process, after exiting the heating furnace and undergoing high-pressure water descaling, the casting blank is rolled and then sent to a holding pit for slow cooling for ≥ 24 h.
